# FASCICULE DE BREVET EUROPEEN

(11) **EP 2 774 818 B1**
(45) Date de publication et mention de la délivrance du brevet: **16.11.2016**
(21) Numéro de dépôt: 14157671.0
(22) Date de dépôt: 04.03.2014
(51) Int. Cl.: B60R 22/03

(54) **Dispositif pour la présentation et la prise en main d'une ceinture de sécurité trois points qui équipe des sièges avant d'un véhicule automobile**
Vorrichtung zum Vorbringen und Handhaben eines Dreipunktsicherheitsgurtes eines Vordersitzes eines Kraftfahrzeuges
Presenter and handling device of a three point seat belt of a front seat of an automitive vehicle

(30) Priorité: 04.03.2013 FR 1351899
(43) Date de publication de la demande: 10.09.2014
(73) Titulaire: Dura Automotive Systems SAS, 91570 Bièvres (FR)
(72) Inventeur: Delavigne, Francis, 91340 OLLAINVILLE (FR); Farges, Thomas, 91940 GOMETZ LE CHATEL (FR)
(74) Mandataire: Cabinet Laurent & Charras

(56) Documents cités:
- EP-A2- 1 693 257
- WO-A1-00/73104
- WO-A1-01/08938
- JP-A- 2007 125 953

## Description

L'invention se rattache au secteur technique des véhicules automobiles et concerne plus particulièrement les ceintures de sécurité.

L'invention trouve une application particulièrement avantageuse pour tout type de ceinture de sécurité dite à trois points. En ce sens, les points d'ancrage de la ceinture sont situés au-dessus et en arrière des épaules de l'occupant, à l'arrière de l'assise des sièges avants équipant le véhicule, la sangle libre qui passe en travers de la poitrine de l'occupant, étant équipée d'une boucle destinée à être crochetée au système d'attache généralement disposé entre les assises des deux sièges avants. Ce type de ceinture, parfaitement connu pour un homme du métier, est assujetti à un pré-tendeur qui se déclenche en cas de choc et qui tire la ceinture vers l'arrière avec pour objectif de plaquer le corps de l'usager contre le dossier du siège et d'assurer, par conséquent, un meilleur couplage entre l'occupant et le siège.

Dans la plupart des états, le port de la ceinture de sécurité est devenu obligatoire.

Ainsi, pour inciter ou obliger le ou les occupant(s) du véhicule, notamment des places avant de mettre leur ceinture, différentes solutions techniques permettant de présenter automatiquement la ceinture ont été proposées.

On peut citer, par exemple, l'enseignement du document US 2001/0040369 qui permet de présenter le brin libre de la ceinture équipé de la boucle, au moyen d'un doigt motorisé monté avec capacité de déplacement en translation sur un rail monté au niveau du bord latéral de l'assise.

Le doigt a pour effet de déplacer le brin libre de la ceinture de sa position de non-utilisation, c'est-à-dire lorsque la boucle est située au-dessus et à l'arrière des épaules de l'occupant, à proximité des mains de ce dernier afin de faciliter sa préhension en évitant certains mouvements de torsion vers l'arrière.

Une autre solution de ce type ressort également de l'enseignement du document US 6,193,275.

On peut citer également l'enseignement du document US 2006/0181073. La préhension de la ceinture s'effectue au moyen d'un doigt monté en débordement de la garniture de la portière et apte à être déplacé dans un chemin de guidage profilé. Après avoir été actionné pour la préhension de la ceinture et lorsque l'occupant décroche la ceinture, cette dernière n'est plus soumise à l'action du doigt sous l'effet de l'ouverture de la portière.

EP 1 693 257 A2 divulgue un dispositif correspondant au préambule de la revendication 1.

Il ressort de l'analyse de cet état de la technique, que le mécanisme de déplacement de la ceinture et que le mécanisme de maintien de cette dernière dans sa position de préhension, ne sont pas indépendants étant donné que dans tous les cas ils sont constitués par le doigt.

Autrement dit, lorsque la ceinture est déplacée en vue de sa préhension par le doigt, l'occupant se trouve dans l'obligation de continuer le geste et, par conséquent, de boucler la ceinture. Or, dans certains cas, il peut être souhaité de ne pas boucler de suite la ceinture, mais de le faire seulement lorsque le véhicule démarre.

L'invention s'est fixée pour but de remédier à ces inconvénients d'une manière simple, sûre, efficace et rationnelle.

Le problème que se propose de résoudre l'invention est de ne pas affecter la fonction de la ceinture, c'est-à-dire de ne pas modifier son fonctionnement et son mode d'encrage tel que prévu par le constructeur, ne pas gêner l'utilisateur et de permettre à la ceinture de se ré enrouler lors de l'ouverture de la porte tout en permettant à l'utilisateur de prendre cette ceinture à n'importe quel moment.

Pour résoudre un tel problème il a été conçu et mis au point un dispositif pour la présentation et la prise en main d'une ceinture de sécurité trois points qui équipe des sièges avants d'un véhicule automobile, lequel dispositif comprend :
- un doigt apte à être mis en contact avec une partie de la ceinture,
- un moyen apte à permettre le déplacement du doigt pour amener d'une manière concomitante la ceinture vers l'avant du siège correspondant à une position de préhension de ladite ceinture,
- un élément de maintien de la ceinture dans ladite position de préhension et en position fermée d'une portière équipant le véhicule, le doigt étant ramené en position initiale.

Pour résoudre le problème posé de la préhension du brin libre de la ceinture en vue de la présenter au niveau des mains de l'occupant, le doigt est monté avec capacité de déplacement en translation, au niveau du seuil de la portière.

Selon une autre caractéristique, pour résoudre le problème posé de la présentation et de la prise en main de la ceinture, le moyen apte à permettre le déplacement du doigt, est un mécanisme de translation du type va et vient intégré dans l'épaisseur du seuil de la portière. Le mécanisme de translation est commandé par un actionneur assujetti à la position de fermeture de la portière.

Un autre problème que se propose de résoudre l'invention est d'assurer une indépendance entre la fonction de déplacement de la ceinture en vue de sa préhension et la fonction de maintien de la ceinture dans cette position de préhension.

Dans ce but, l'élément de maintien de la ceinture en position de préhension est monté sur une partie de la face interne de la portière. En position fermée de la portière, la ceinture est maintenue dans sa position de préhension par l'élément de portière, le doigt étant ramené dans sa position initiale.

Pour résoudre le problème posé de permettre à la ceinture de se ré enrouler automatiquement lors de l'ouverture de la portière, il apparaît qu'après ouverture de la portière, l'élément de maintien de la ceinture échappe à ladite ceinture qui est libérée pour être automatiquement ramenée dans une position de non utilisation en regard du doigt ramené dans sa position initiale comme indiqué.

L'invention est exposée ci-après plus en détail à l'aide des figures des dessins annexés dans lesquels :

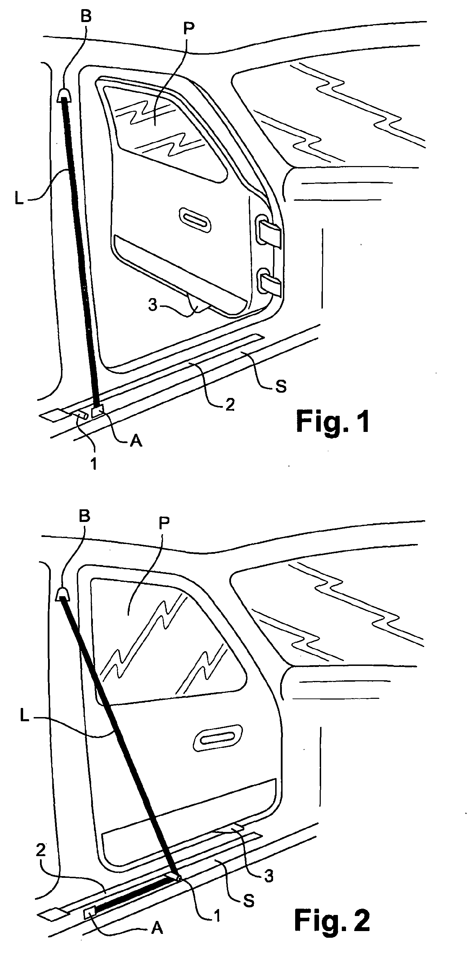

- les figures 1, 2, 3 et 4 sont des vues en perspective à caractère schématique montant le principe de fonctionnement du dispositif de présentation de prise en main de la ceinture de sécurité selon les caractéristiques de l'invention.

Comme indiqué, le dispositif trouve une application particulière dans le cas d'une ceinture de sécurité à trois points.

De manière parfaitement connue pour un homme du métier, ce type de ceinture comprend un point d'ancrage bas (A) et un point d'ancrage haut (B) généralement situés au niveau du montant (C) de la carrosserie. L'un des brins de la sangle de sécurité est intégré dans le montant avec un mécanisme de mise en tension automatique, tandis que l'autre brin (L), équipé de la boucle de ceinture en tant que telle, apparaît à l'extérieur du montant pour être saisi manuellement par l'occupant.

En position de non-utilisation, ce brin libre (L) est disposé le long du montant (C), autrement dit, au droit et légèrement en arrière des épaules de l'occupant, sensiblement vers le dossier du siège. Le but recherché est de pouvoir déplacer automatiquement ce brin libre (L) vers la partie avant de l'assise du siège pour faciliter sa préhension par l'occupant du véhicule.

Le dispositif selon l'invention résulte essentiellement de la combinaison de trois moyens, à savoir :
- un doigt (1), un moyen (2) de déplacement du doigt (1) et un élément (3) de maintien du brin (L) de la ceinture.

Le doigt (1) est destiné à être mis en contact avec une partie de la ceinture de sécurité, plus particulièrement avec le brin (L) de cette ceinture. Ce doigt (1) est positionné à l'arrière du point bas d'ancrage (A) de la ceinture.

Ce doigt (1) est monté avec capacité de déplacement en translation au niveau du seuil (S) de la portière considérée (P).

Par exemple, le doigt (1) déborde d'un rail de guidage (2) fixé au niveau du seuil (S). Le moyen apte à permettre le déplacement du doigt est un mécanisme en translation du type va et vient intégré dans ledit seuil. Ce mécanisme de déplacement de tout type connu et approprié par un homme du métier peut, par exemple, être constitué par un moteur pas à pas à double sens de rotation et coopérant avec un système de vis sans fin auquel est assujetti le doigt (1).

Le doigt (1) est situé à l'arrière du brin (L) de la ceinture de sorte que lorsque ce dernier est déplacé comme il sera indiqué dans la suite de la description, il vient en prise avec le brin (L) de la ceinture en vue de son déplacement en direction de l'extrémité avant de l'assise du siège. A noter qu'en position de non utilisation de la ceinture, le doigt (1) peut être escamoté.

Le mécanisme de commande de translation du doigt (1) est asservi à un actionneur assujetti, par exemple, à la position de fermeture de la portière. A noter que le déclenchement de l'actionneur peut être réalisé suivant différents protocoles par exemple lorsque l'occupant s'assoit, lorsqu'il ferme la porte, lorsqu'il met le contact ou lorsqu'il appuie sur un bouton de commande.

L'élément (3) a pour fonction d'assurer le maintien de la ceinture et plus particulièrement du brin (L) dans sa position de préhension et en position fermée de la portière (P). Cet élément de maintien (3) est monté sur une partie de la face interne de la portière et en débordement de cette dernière. Par exemple, cet élément de maintien (3) est positionné de manière fixe ou de manière escamotable, au niveau du bas de la portière, c'est-à-dire au niveau du seuil de l'ouverture, sensiblement au niveau de la partie avant de l'assise du siège.

En position fermée de la portière (P), le brin (L) de la ceinture est maintenu dans sa position de préhension par l'élément de maintien (3), le doigt (1) pouvant, dans ces conditions, être ramené dans sa position initiale. A noter que l'élément de maintien (3) peut être profilé en présentant notamment un profil arrondi (3a) permettant au brin (L) de la ceinture de glisser sur l'élément pour tomber dans un décrochement (3b) assurant le maintien du brin (L). La trajectoire du doigt (1) est donc prédéterminée de sorte que lorsque le brin (L) arrive dans le décrochement de l'élément de maintien (3), le moteur d'entrainement du doigt (1) est commandé dans un sens inverse pour ramener ledit doigt dans sa position initiale.

Il résulte de ces caractéristiques qu'il y a donc une indépendance totale entre la fonction de préhension et de déplacement de la ceinture par le doigt (1) et la fonction de maintien de la ceinture dans la position de préhension par l'élément (3).

Après ouverture de la portière (P), l'élément (3) de maintien de la ceinture échappe ladite ceinture, plus particulièrement sur le brin (L) qui, par conséquent, est automatiquement libéré pour être ramené dans sa position de non-utilisation sous l'effet de rappel du système de mise en tension qui équipe d'origine cette ceinture de sécurité. Autrement dit le brin (L) de la ceinture est ramené en regard du doigt (1) pour être prêt à être saisi par ledit doigt.

On renvoie aux figures 1 à 4 qui montrent le fonctionnement du dispositif.

A la figure 1, le dispositif n'est pas actionné. La porte (P) est ouverte, le doigt (1) est positionné à l'arrière du brin libre (L) de la ceinture équipée de la boucle et qui peut être saisie.

A la figure 2, le dispositif est actionné. Autrement dit, le mécanisme de commande en translation du doigt (1) assure le déplacement de ce dernier provoquant concomitamment la préhension du brin (L) de la ceinture et son déplacement en direction de l'avant de l'assise du siège.

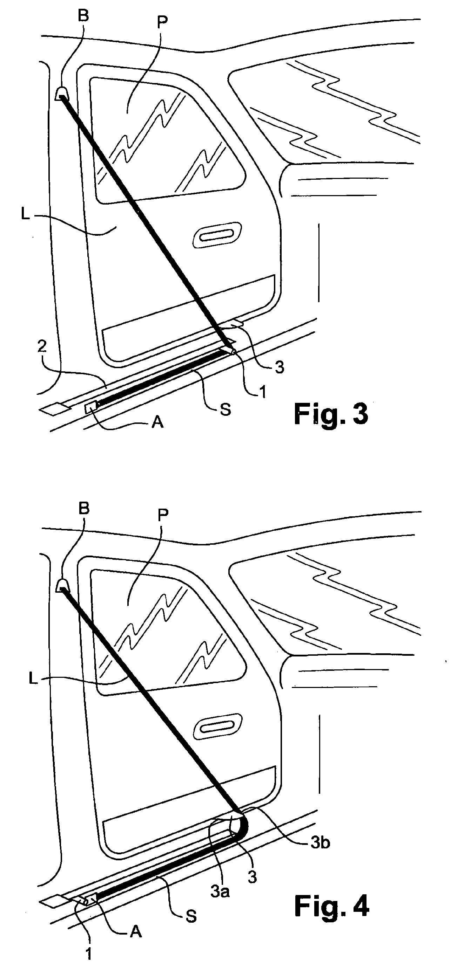

Le brin (L) arrive au niveau de l'élément de retenu (3) que présente la portière pour être positionné dans le décrochement dudit élément (figure 3).

L'élément (3) assure, par conséquent, le maintien du brin de la ceinture dans la position de préhension. Le doigt (1) est alors automatiquement ramené en arrière dans sa position initiale (figure 4).

Dans cette position, l'occupant, est par conséquent libre de prendre ou non la ceinture en vue de la boucler.

Dès que l'occupant ouvre la porte, le brin de la ceinture échappe l'élément de retenu (3) de sorte que ladite ceinture peut se ré enrouler automatiquement sous l'effet du rappel de son mécanisme de préhension. On se retrouve donc dans la position illustrée figure 1.

Il ressort de la description qui précède que le dispositif, selon l'invention, est totalement indépendant du fonctionnement en tant que tel de la ceinture tel que prévu par le constructeur.

Il n'y a pas de modification des points d'ancrage de la ceinture tels qu'ils ont été validés.

Les avantages ressortent bien de la description, en particulier on souligne et on rappelle :
- Le dispositif n'affecte pas la fonction de la ceinture en étant totalement indépendant.
- Le système de préhension et de déplacement de la ceinture est totalement indépendant du système de maintien de la ceinture dans la position de préhension. Autrement dit, lorsque le doigt a échappé la ceinture, l'occupant peut saisir la ceinture soit pour la boucler soit pour la laisser se ré enrouler automatiquement en position de non utilisation, la portière étant toujours fermée.
- La ceinture se ré enroule automatiquement lors de l'ouverture de la porte en échappant l'élément de maintien.

## Revendications

1. Dispositif pour la présentation et la prise en main d'une ceinture de sécurité trois points qui équipe des sièges avant d'un véhicule automobile et qui comprend :
- un doigt (1) apte à être mis en contact avec une partie (L) de la ceinture,
- un moyen (2) apte à permettre le déplacement du doigt (1) pour amener, d'une manière concomitante, la partie (L) de la ceinture vers l'avant du siège correspondant à une position de préhension de ladite ceinture, **caractérisé par**
- un élément de maintien (3) de la partie de la ceinture dans sa position de préhension et en position fermée d'une portière équipant le véhicule, ledit élément étant monté sur une partie de la face interne de la portière, le doigt (1) étant ramené en position initiale, dans cette position de préhension de la ceinture et dans cette position de fermeture de la portière.

2. Dispositif selon la revendication 1 **caractérisé en ce que** le doigt (1) est positionné à l'arrière d'un point bas d'ancrage de la ceinture.

3. Dispositif selon l'une quelconque des revendications 1 et 2, **caractérisé en ce que** le doigt (1) est monté avec capacité de déplacement en translation, au niveau du seuil de la portière.

4. Dispositif selon l'une quelconque des revendications 1 et 2, **caractérisé en ce que** le moyen apte à permettre le déplacement du doigt (1) est un mécanisme de translation du type va et vient intégré dans l'épaisseur du seuil de la portière.

5. Dispositif selon la revendication 4, **caractérisé en ce que** le mécanisme de translation est commandé par un actionneur assujetti à la position de fermeture de la portière.

6. Dispositif selon l'une quelconque des revendications 1 à 5, **caractérisé en ce que** après ouverture de la portière, l'élément de maintien (3) de la partie (L) de la ceinture échappe à ladite partie de ceinture qui est libérée pour être automatiquement ramenée dans une position de non utilisation en regard du doigt (1) ramené dans sa position initiale.

## Patentansprüche

1. Vorrichtung zur Bereitstellung und zum Ergreifen eines Dreipunkt-Sicherheitsgurts an den Vordersitzen eines Kraftfahrzeugs mit:
- einem Finger (1), der mit einem Gurtabschnitt (L) in Kontakt gebracht werden kann,
- einem Mittel (2), mit dem der Finger (1) versetzt werden kann, um gleichzeitig den Gurtabschnitt (L) in Richtung Sitzvorderseite und damit in eine griffgünstige Position zu führen, **gekennzeichnet durch**
- ein Halteelement (3), das den Gurtabschnitt in seiner griffgünstigen Position und eine in das Fahrzeug eingebaute Tür in geschlossener Position hält, wobei das Element an einem Teil der Türinnenseite angebracht ist, und wobei der Finger (1) in dieser zum Ergreifen des Gurts günstigen Position und in dieser geschlossenen Türposition in die Ausgangsposition zurückgeführt wird.

2. Vorrichtung nach Anspruch 1, **dadurch gekennzeichnet, dass** der Finger (1) hinter einem niedrigen Anschlagpunkt des Gurts angeordnet ist.

3. Vorrichtung nach einem der Ansprüche 1 und 2, **dadurch gekennzeichnet, dass** der Finger (1) im Bereich des Türschwellers translatorisch verschiebbar ausgebildet ist.

4. Vorrichtung nach einem der Ansprüche 1 und 2, **dadurch gekennzeichnet, dass** es sich bei dem Mittel, mit dem der Finger (1) versetzt werden kann, um einen hin- und hergehenden Tranlationsmechanismus handelt, der in den Türschweller eingelassen ist.

5. Vorrichtung nach Anspruch 4, **dadurch gekennzeichnet, dass** der Translationsmechanismus über einen Betätiger gesteuert wird, der an die Schließposition der Tür geknüpft ist.

6. Vorrichtung nach einem der Ansprüche 1 bis 5, **dadurch gekennzeichnet, dass** sich nach dem Öffnen der Tür das Halteelement (3) des Gurtabschnitts (L) dem Gurtabschnitt entzieht, welcher freigesetzt wird, um automatisch in eine Nichtbenutzungsposition bezogen auf den in seine Ausgangsposition zurückgeführten Finger (1) zurückgeführt zu werden.

## Claims

1. Device for the presentation and the handling of a three point safety belt which equips the front seats of a motor vehicle, and which comprises:
- a finger (1) adapted to be brought into contact with a portion (L) of the belt,
- a mean (2) adapted to enable the movement of the finger (1) for concomitantly bringing the portion (L) of the belt toward the front of the seat, corresponding to a gripping position of said belt, **characterized by**
- a holding member (3) of the part of the belt in its gripping position and in the closed position of a door fitted to the vehicle, said member being mounted on a portion of the inner face of the door, the finger (1) being returned to its initial position, in this position of belt gripping and in this closed position of the door.

2. Device according to claim 1 **characterized in that** the finger (1) is positioned at the rear of a lower anchoring point of the belt.

3. Device according to any one of claims 1 and 2, **characterized in that** the finger (1) is mounted being capable of translational movement, at the door sill.

4. Device according to any one of claims 1 and 2, **characterized in that** the mean adapted to enable the movement of the finger (1) is a to-and-fro like translation mechanism integrated in the thickness of the door sill.

5. Device according to claim 4, **characterized in that** the translation mechanism is controlled by an actuator subjected to the closed position of the door.

6. Device according to any one of claims 1 to 5, **characterized in that** after opening the door, the holding element (3) of the portion (L) of the belt escapes said belt portion which is released to be automatically returned to a non-use position opposite to the finger (1) returned to its initial position.
